# EUROPEAN PATENT SPECIFICATION

(11) **EP 3 761 688 B1**
(45) Date of publication and mention of the grant of the patent: **06.11.2024**
(21) Application number: 19780912.2
(22) Date of filing: 02.04.2019
(51) Int. Cl.: H04W 8/22, H04W 60/00

(54) **COMMUNICATION CAPABILITY REPORTING**
MELDUNG DER KOMMUNIKATIONSKOMPETENZ
NOTIFICATION DE CAPACITÉ DE COMMUNICATION

(30) Priority: 04.04.2018 CN 201810299983
(43) Date of publication of application: 06.01.2021
(73) Proprietor: HUAWEI TECHNOLOGIES CO., LTD., Shenzhen, Guangdong 518129 (CN)
(72) Inventor: WANG, Da, Shenzhen, Guangdong 518129 (CN); WANG, Jian, Shenzhen, Guangdong 518129 (CN); WANG, Hongyue, Shenzhen, Guangdong 518129 (CN); LIU, Haitao, Shenzhen, Guangdong 518129 (CN)
(74) Representative: Maiwald GmbH
(86) International application number: PCT/CN2019/080903
(87) International publication number: WO 2019/192439

(56) References cited:
- EP-A1- 2 613 596
- EP-A2- 2 742 615
- EP-B1- 2 742 615
- WO-A1-2017/052346
- CN-A- 102 573 070
- CN-A- 103 079 194
- HUAWEI ET AL.: "Signalling procedure for UE capability ID report", R2-1814604, NO. 3GPP TSG-RAN WG2 # 103BIS, 12 October 2018 (2018-10-12), XP051524028
- "Study on optimisations of UE radio capability signalling (Release 16)", 3GPP TR 23.743 V2.0.0, 31 March 2019 (2019-03-31), pages 20 - 23, XP051722775
- NTT DOCOMO: "UE capability retrieval framework in NR", R2-1801355, NO. 3GPP TSG-RAN WG2 NR ADHOC, 26 January 2018 (2018-01-26), pages 1, 2, XP051386767

## Description

### TECHNICAL FIELD

This application relates to the field of communications technologies, and in particular, to reporting communication capability.

### BACKGROUND

Currently, establishing a radio resource control (radio resource control, RRC) connection between a terminal and an evolved NodeB (evolved NodeB, eNB) in existing long term evolution (long term evolution, LTE) usually includes the following three scenarios:
Scenario 1: The terminal switches from an idle (idle) state to a connected (connected) state.
Scenario 2: The terminal is handed over from one eNB to another eNB.
Scenario 3: The terminal initially registers with a network.

In the scenario 1 and the scenario 2, after the RRC connection is established, because a mobility management entity (mobility management entity, MME) stores a communication capability of the terminal, the MME may send the communication capability of the terminal to the eNB. In this case, the terminal does not need to report the communication capability of the terminal. In the scenario 3, after the RRC connection is established, because an MME does not store a communication capability of the terminal, the MME initiates a capability reporting request to the terminal, so that the terminal reports the communication capability of the terminal.

However, in a 3rd generation partnership project (English full name: The 3rd Generation Partnership Project, 3GPP for short) 5th generation (5th generation, 5G) new radio (new radio, NR) system, many parameters are required for reporting a communication capability of a terminal, and a volume of reported data is much greater than that in LTE. Therefore, a method for associating a communication capability of a terminal with a capability identifier of the terminal is proposed in the prior art, so that an access device or a network device can determine the communication capability of the terminal based on the capability identifier of the terminal. The capability identifier of the terminal is determined based on an international mobile equipment identity (international mobile equipment identity, IMEI) of the terminal. For example, the capability identifier of the terminal may be a type allocation code (type allocation code, TAC) and a software version number (software version number, SVN) in the international mobile equipment identity (international mobile equipment identity, IMEI) of the terminal.

However, the foregoing solution has the following problem: If software of the terminal is refreshed and hardware does not change (in other words, an IMSI of the terminal does not change), but the communication capability of the terminal changes, the terminal cannot update its own communication capability because the capability identifier of the terminal does not change. For example, when a software version upgrade of the terminal causes a change of the communication capability of the terminal, or software version authentication or modification by the global certification forum (global certification forum, GCF) or in a protocol causes a change of the communication capability of the terminal, or subsequent software maintenance causes a change of the communication capability of the terminal, the terminal cannot update its own communication capability if the foregoing communication capability reporting method is used.

Therefore, a technical problem that urgently needs to be resolved currently is how to provide a communication capability reporting method, so that a communications device can update its own communication capability in a timely manner when the communication capability of the communications device is associated with a capability identifier of the communications device. WO 2017/052346 A1 describes systems and methods for operating a mobile device in a mobile communication network. The method comprises transmitting a mobile device component identifier to a network node within the mobile communication network. The mobile device component identifier identifies at least one hardware or software component of the mobile device. The mobile device component identifier is indicative of capability information specifying at least one capability of the mobile device for communication with the mobile communication network. The article by NTT Docomo: "UE capability retrieval framework in NR", R2-1801355, No. 3GPP TSG-RAN WG2 NR Adhoc, 26 January 2018, pages 1-2 refers to a UE capability retrieval framework in NR. The CN 103 079 194 A1 refers to a signalling procedure for UE capability ID report.

### SUMMARY

Embodiments of this application provide a communication capability reporting method, a device, and computer-executable instructions, so that a communications device can update its own communication capability in a timely manner when the communication capability of the communications device is associated with a capability identifier of the communications device.

To achieve the foregoing objective, the following technical solutions are used in the embodiments of this application. The present application is defined in the appended independent claims. Further implementations are disclosed in the pending independent claims. In the following, implementations not falling within the scope of the claims are to be understood as examples useful for understanding the application.

### BRIEF DESCRIPTION OF DRAWINGS

FIG. 1 is a schematic diagram of a structure of a communications system according to an embodiment of this application;
FIG. 2 is a schematic diagram of a hardware structure of an access device and a communications device according to an embodiment of this application;
FIG. 3A and FIG. 3B are a schematic flowchart 1 of a communication capability reporting method according to an embodiment of this application;
FIG. 4 is a schematic diagram of maintenance of a capability identifier of a terminal and a communication capability of the terminal according to an embodiment of this application;
FIG. 5 shows a format 1 of an IMEI according to an embodiment of this application;
FIG. 6 shows a format 2 of an IMEI according to an embodiment of this application;
FIG. 7 shows an example of a first IMEI and a second IMEI according to an embodiment of this application;
FIG. 8A and FIG. 8B are a schematic flowchart 2 of a communication capability reporting method according to an embodiment of this application;
FIG. 9 is a schematic diagram of a structure of a first communications device according to an embodiment of this application; and
FIG. 10 is a schematic diagram of a structure of a second communications device according to an embodiment of this application.

### DESCRIPTION OF EMBODIMENTS

The following describes the technical solutions in the embodiments of this application with reference to the accompanying drawings in the embodiments of this application. In description of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of this application, "a plurality of" means two or more than two. In addition, to clearly describe the technical solutions in the embodiments of this application, terms such as "first" and "second" are used in the embodiments of this application to distinguish between same items or similar items that have a basically same function and usage. A person skilled in the art can understand that the terms such as "first" and "second" are not intended to limit a quantity or an execution sequence, and the terms such as "first" and "second" do not indicate a definite difference.

In addition, a network architecture and a service scenario described in the embodiments of this application are intended to describe the technical solutions in the embodiments of this application more clearly, and do not constitute a limitation on the technical solutions provided in the embodiments of this application. A person of ordinary skill in the art may know that: With the evolution of the network architecture and the emergence of new service scenarios, the technical solutions provided in the embodiments of this application are also applicable to similar technical problems.

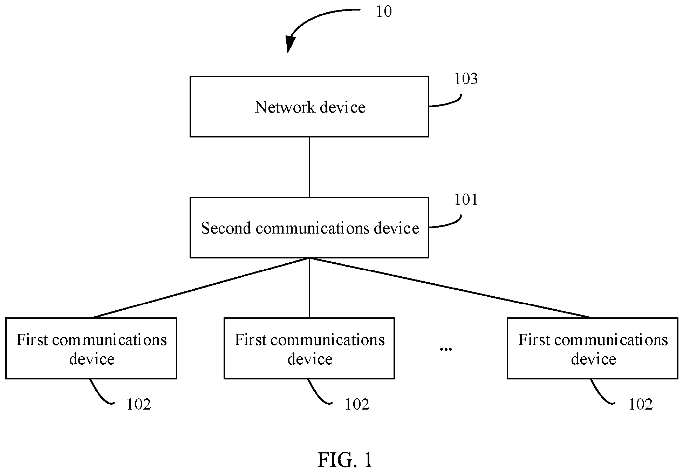

FIG. 1 shows a communications system 10 according to an embodiment of this application. The communications system 10 includes a second communications device 101, a network device 103 connected to the second communications device 101, and one or more first communications devices 102 connected to the second communications device 101. An example in which the second communications device 101 interacts with the network device 103 and any first communications device 102 is used below for description.

The first communications device 102 is configured to determine a capability identifier of the first communications device 102, where the capability identifier of the first communications device 102 is one of one or more capability identifiers corresponding to the first communications device 102.

The first communications device 102 is further configured to send the capability identifier of the first communications device 102 to the second communications device 101.

The second communications device 101 is configured to receive the capability identifier of the first communications device 102 that is sent by the first communications device 102, and send the capability identifier of the first communications device 102 to the network device 103.

The network device 103 is configured to receive the capability identifier of the first communications device 102 that is sent by the second communications device 101, and determine a communication capability of the first communications device 102 based on the capability identifier of the first communications device 102.

Optionally, the communication capability in this embodiment of this application may include, for example, an access capability or a processing capability. This is uniformly described herein, and details are not described below again.

Optionally, the first communications device 102 and the second communications device 101 in this embodiment of this application may directly communicate with each other, or may communicate with each other through forwarding by another device. This is not specifically limited in this embodiment of this application.

Optionally, the network device 103 and the second communications device 101 in this embodiment of this application may directly communicate with each other, or may communicate with each other through forwarding by another device. This is not specifically limited in this embodiment of this application.

Optionally, the first communications device 102 in this embodiment of this application may be a terminal, a chip system or a circuit in a terminal, or the like. This is not specifically limited in this embodiment of this application. The chip system in this embodiment of this application may include a chip, or may include a chip and another discrete device. This is uniformly described herein, and this is not specifically limited in this embodiment of this application.

Optionally, the second communications device 101 in this embodiment of this application may be a terminal, a chip system or a circuit in a terminal, an access device, a chip system or a circuit in an access device, or the like. This is not specifically limited in this embodiment of this application.

Optionally, the network device 103 in this embodiment of this application may be a mobility management network element, a chip system or a circuit in a mobility management network element, or the like. This is not specifically limited in this embodiment of this application.

The terminal (terminal) in this embodiment of this application may include various devices with a wireless communication function in an NR system or a future evolved public land mobile network (public land mobile network, PLMN), for example, a handheld device, an in-vehicle device, a wearable device, a computing device, or another processing device connected to a wireless modem; or may include a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone) or a wireless local loop (wireless local loop, WLL) station, a machine type communication (machine type communication, MTC) terminal, user equipment (user equipment, UE), a mobile station (mobile station, MS), a terminal device (terminal device), relay user equipment, or the like. For example, the relay user equipment may be a 5G residential gateway (residential gateway, RG). For ease of description, the devices mentioned above are collectively referred to as terminals in this application.

The access device in this embodiment of this application is a device that accesses a core network. For example, the access device may be a base station in the 5G NR system or the future PLMN, a broadband network gateway (broadband network gateway, BNG), an aggregation switch, or a non-3GPP access device. The base station may include base stations in various forms, for example, a micro base station (also referred to as a small cell), a macro base station, a relay station, an access point, or an NR NodeB (NR NodeB, gNB) in the 5G NR system. This is not specifically limited in this embodiment of this application.

The mobility management network element in this embodiment of this application may be, for example, an access and mobility management function (access and mobility management function, AMF) network element in the 5G NR system or another mobility management network element in the future evolved PLMN. This is not specifically limited in this embodiment of this application.

In addition, specific implementation of the foregoing solution is described in detail in the following embodiments, and details are not described herein.

Based on the communications system provided in this embodiment of this application, when the communication capability needs to be reported, the capability identifier of the first communications device that is sent by the first communications device to the second communications device is one of the one or more capability identifiers corresponding to the first communications device. In other words, in this embodiment of this application, different capability identifiers may be used for the first communications device. Therefore, when the communication capability of the first communications device is associated with the capability identifier of the first communications device, the first communications device may update its own communication capability in a timely manner by using the capability identifier determined in the one or more capability identifiers corresponding to the first communications device.

Optionally, the first communications device or the second communications device in FIG. 1 in this embodiment of this application may be implemented by one device, or may be implemented jointly by a plurality of devices, or may be a functional module in a device. This is not specifically limited in this embodiment of this application. It can be understood that the foregoing function may be a network element in a hardware device, or may be a software function running on dedicated hardware, or may be a virtualized function instantiated on a platform (for example, a cloud platform).

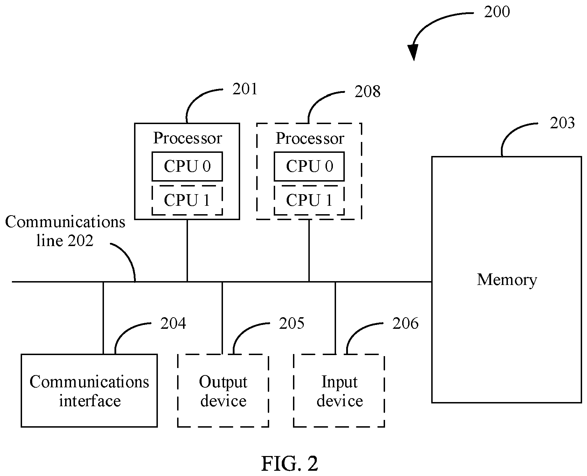

For example, the first communications device or the second communications device in FIG. 1 in this embodiment of this application may be implemented by a communications device in FIG. 2. FIG. 2 is a schematic diagram of a hardware structure of a communications device according to an embodiment of this application. The communications device 200 includes at least one processor 201, a communications line 202, a memory 203, and at least one communications interface 204.

The processor 201 may be a general-purpose central processing unit (central processing unit, CPU), a microprocessor, an application-specific integrated circuit (application-specific integrated circuit, ASIC), or one or more integrated circuits configured to control execution of programs of the solutions of this application.

The communications line 202 may include a channel that transmits information between the foregoing components.

The communications interface 204 is configured to communicate, by using any apparatus like a transceiver, with another device or a communications network, for example, Ethernet, a radio access network (radio access network, RAN), or a wireless local area network (wireless local area networks, WLAN).

The memory 203 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disk storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. However, this does not constitute a limitation herein. The memory may exist independently and is connected to the processor by using the communications line 202. Alternatively, the memory may be integrated with the processor.

The memory 203 is configured to store a computer executable instruction for executing the solutions of this application, and the processor 201 controls execution of the computer executable instruction. The processor 201 is configured to execute the computer executable instruction stored in the memory 203, so as to implement a communication capability reporting method provided in the following embodiments of this application.

Optionally, the computer executable instruction in this embodiment of this application may also be referred to as application program code. This is not specifically limited in this embodiment of this application.

In specific implementation, in an embodiment, the processor 201 may include one or more CPUs, for example, a CPU 0 and a CPU 1 in FIG. 2.

In specific implementation, in an embodiment, the communications device 200 may include a plurality of processors, for example, a processor 201 and a processor 208 in FIG. 2. Each of the processors may be a single-CPU (single-CPU) processor, or may be a multi-CPU (multi-CPU) processor. The processor herein may be one or more devices, a circuit, and/or a processing core configured to process data (for example, a computer program instruction).

In specific implementation, in an embodiment, the communications device 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 communicates with the processor 201, and may receive a user input in a plurality of manners. For example, the input device 206 may be a mouse, a keyboard, a touchscreen device, or a sensing device.

The communications device 200 may be a general-purpose device or a dedicated device. In specific implementation, the communications device 200 may be the terminal, the access device, the chip system, or a device with a structure similar to that in FIG. 2. A type of the communications device 200 is not limited in this embodiment of this application.

With reference to FIG. 1 and FIG. 2, the following describes in detail the communication capability reporting method provided in the embodiments of this application by using an example in which the communications system shown in FIG. 1 is applied to a current 5G NR system, the first communications device is a terminal in the 5G NR system, the second communications device is a gNB in the 5G NR system, and the network device is an AMF network element in the 5G NR system.

It should be noted that names of messages between network elements in the following embodiments of this application, names of parameters in messages, or the like are merely examples, and there may be other names in specific implementation. This is not specifically limited in the embodiments of this application.

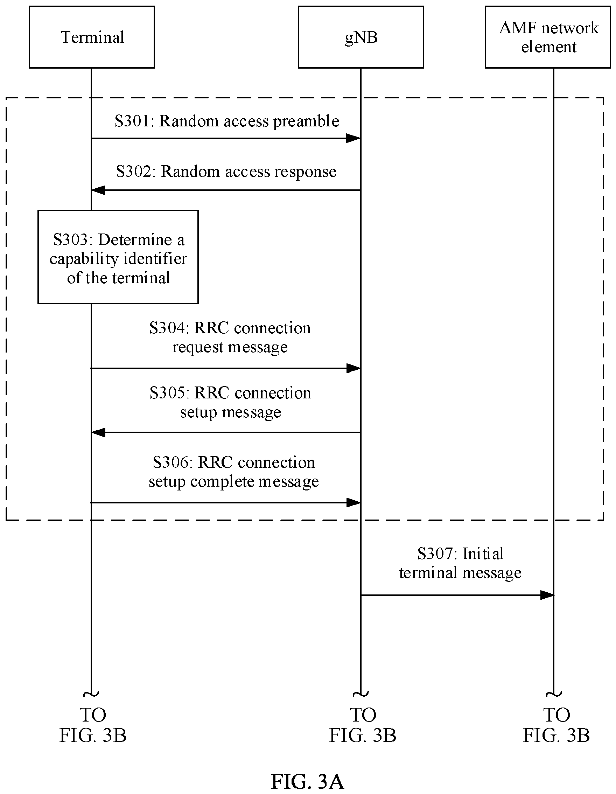

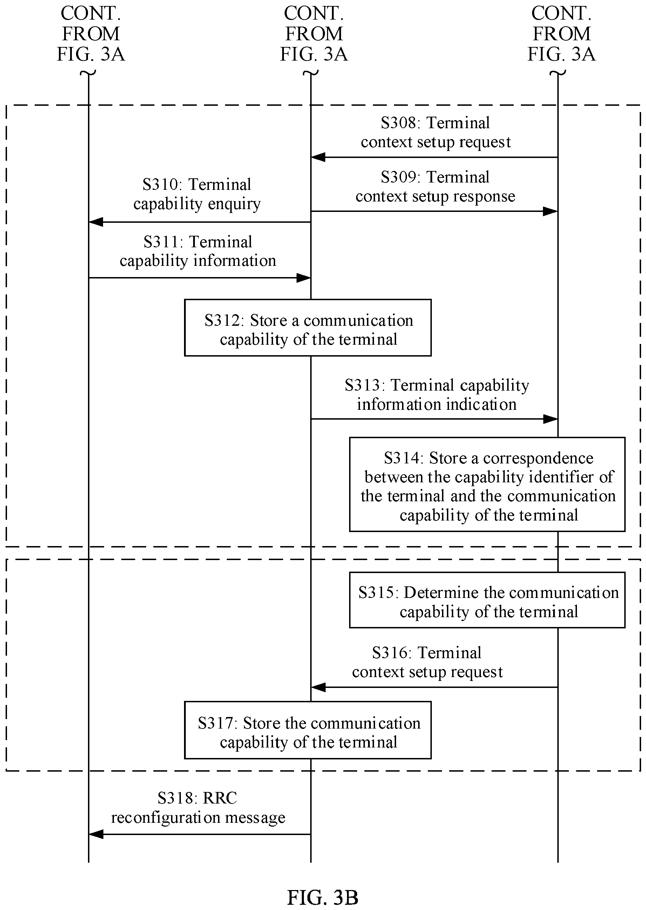

FIG. 3A and FIG. 3B show a communication capability reporting method according to an embodiment of this application. The capability reporting method includes the following steps.

S301. A terminal sends a random access preamble (random access preamble) to a gNB, so that the gNB receives the random access preamble sent by the terminal.

S302. The gNB sends a random access response (random access response) to the terminal, so that the terminal receives the random access response sent by the gNB.

For related implementations of steps S301 and S302, refer to an existing implementation. Details are not described herein.

S303. The terminal determines a capability identifier of the terminal, where the capability identifier of the terminal is one of one or more capability identifiers corresponding to the terminal.

Optionally, in this embodiment of this application, the one or more capability identifiers corresponding to the terminal may be prestored on the terminal, or may be calculated by the terminal based on an algorithm when the terminal needs to report a communication capability, or may be obtained by the terminal in another manner. This is not specifically limited in this embodiment of this application.

Optionally, in this embodiment of this application, when a communication capability of a terminal is associated with a capability identifier of the terminal, a plurality of terminal capability identifiers allocated to different terminal vendors are usually different, to avoid a terminal capability collision between different terminal vendors. In other words, each terminal vendor needs to maintain a plurality of terminal capability identifiers different from those of other terminal vendors, and a terminal communication capability corresponding to each terminal capability identifier. In this way, the gNB or an AMF network element may distinguish between terminals of different vendors based on capability identifiers of the terminals, thereby implementing differentiated competition.

Optionally, the one or more capability identifiers in this embodiment of this application may form a capability identifier set, a capability identifier list, or the like. This is not specifically limited in this embodiment of this application.

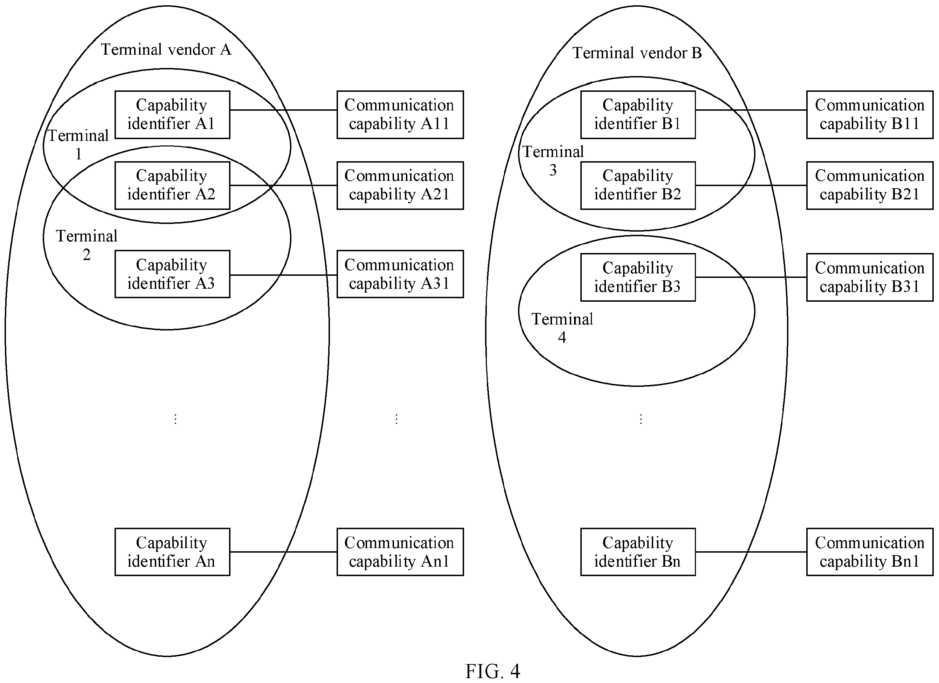

For example, as shown in FIG. 4, a terminal vendor A may maintain one or more terminal capability identifiers, which may include, for example, a capability identifier A1, a capability identifier A2, a capability identifier A3, ..., and a capability identifier An; a terminal vendor B may maintain one or more terminal capability identifiers, which may include, for example, a capability identifier B1, a capability identifier B2, a capability identifier B3, ..., and a capability identifier Bn. A terminal communication capability corresponding to each terminal capability identifier maintained by the terminal vendor A may be as follows: The capability identifier A1 corresponds to a communication capability A11, the capability identifier A2 corresponds to a communication capability A21, the capability identifier A3 corresponds to a communication capability A31, ..., and the capability identifier An corresponds to a communication capability An1. A terminal communication capability corresponding to each terminal capability identifier maintained by the terminal vendor B may be as follows: The capability identifier B1 corresponds to a communication capability B11, the capability identifier B2 corresponds to a communication capability B21, the capability identifier B3 corresponds to a communication capability B31, ..., and the capability identifier Bn corresponds to a communication capability Bn1. The capability identifier A1, the capability identifier A2, the capability identifier A3, ..., and the capability identifier An are different from the capability identifier B1, the capability identifier B2, the capability identifier B3, ..., and the capability identifier Bn. The communication capability A11 corresponding to the capability identifier A1, the communication capability A21 corresponding to the capability identifier A2, the communication capability A31 corresponding to the capability identifier A3, ..., and the communication capability An1 corresponding to the capability identifier An may be the same as or different from the communication capability B11 corresponding to the capability identifier B1, the communication capability B21 corresponding to the capability identifier B2, the communication capability B31 corresponding to the capability identifier B3, ..., and the communication capability Bn1 corresponding to the capability identifier Bn. This is not specifically limited in this embodiment of this application. In this way, when a communication capability of a terminal is associated with a capability identifier of the terminal, the gNB or the AMF network element may distinguish between terminals of different vendors based on different capability identifiers of the terminals, thereby implementing differentiated competition. For example, if the gNB learns that a capability identifier of a terminal is B 1, the gNB may learn, based on the capability identifier B1 of the terminal, that the terminal is a terminal of the terminal vendor B.

Optionally, in this embodiment of this application, each terminal of a terminal vendor also needs to maintain one or more terminal capability identifiers, and a terminal communication capability corresponding to each terminal capability identifier. The one or more terminal capability identifiers maintained by the terminal are identifiers in one or more terminal capability identifiers maintained by the terminal vendor to which the terminal belongs. In other words, assuming that one or more capability identifiers may form a capability identifier set, a set formed by the one or more terminal capability identifiers corresponding to the terminal is usually a subset of a terminal capability identifier set maintained by the terminal vendor to which the terminal belongs. In addition, one or more terminal capability identifiers maintained by different terminals of a same terminal vendor may overlap, or may not overlap. This is not specifically limited in this embodiment of this application.

For example, in FIG. 4, a terminal 1 of the terminal vendor A may maintain the capability identifier A1 and the capability identifier A2, and a terminal 2 of the terminal vendor A may maintain the capability identifier A2 and the capability identifier A3. The terminal capability identifiers maintained by the terminal 1 of the terminal vendor A overlap those maintained by the terminal 2 of the terminal vendor A, and an overlapping part is the capability identifier 2.

Alternatively, in FIG. 4, a terminal 3 of the terminal vendor B may maintain the capability identifier B1 and the capability identifier B2, and a terminal 4 of the terminal vendor B may maintain the capability identifiers B3, and so on. The terminal capability identifiers maintained by the terminal 3 of the terminal vendor B do not overlap those maintained by the terminal 4 of the terminal vendor B.

To sum up, each terminal vendor maintains a plurality of terminal capability identifiers different from those of other terminal vendors, and one or more capability identifiers corresponding to a terminal of the terminal vendor are identifiers in one or more capability identifiers maintained by the terminal vendor. Therefore, to distinguish between terminals of different vendors, one or more capability identifiers corresponding to terminals of different terminal vendors do not overlap. This is uniformly described herein, and details are not described below again.

Optionally, in this embodiment of this application, one or more capability identifiers corresponding to a terminal of a terminal vendor, and a terminal communication capability corresponding to each terminal capability identifier may be updated by using software. For example, when a software version upgrade of the terminal causes a change of a communication capability of the terminal, or software version authentication or modification by the GCF or in a protocol causes a change of a communication capability of the terminal, or subsequent software maintenance causes a change of a communication capability of the terminal, the one or more capability identifiers corresponding to the terminal, and the terminal communication capability corresponding to each terminal capability identifier may be updated.

For example, as shown in FIG. 4, assuming that the terminal 1 of the terminal vendor A originally maintains the capability identifier A1 and the capability identifier A2, when a software version upgrade of the terminal 1 causes a change of a communication capability of the terminal 1, or software version authentication or modification by the GCF or in a protocol causes a change of a communication capability of the terminal 1, or subsequent software maintenance causes a change of a communication capability of the terminal 1, the capability identifier A1 and the capability identifier A2 maintained by the terminal 1 of the terminal vendor A may be updated. For example, after the update, the terminal 1 maintains the capability identifier A3 and the capability identifier An. When the capability identifiers maintained by the terminal 1 of the terminal vendor A are updated to the capability identifier A3 and the capability identifier An, terminal communication capabilities maintained by the terminal 1 of the terminal vendor A are also updated to the communication capability A31 corresponding to the capability identifier A3 and the communication capability An1 corresponding to the capability identifier An. This is uniformly described herein, and details are not described below again.

Optionally, in this embodiment of this application, the capability identifier of the terminal may be represented in a plurality of forms. The following describes a representation form of the capability identifier of the terminal.

For example, the capability identifier of the terminal includes at least one component of a first IMEI.

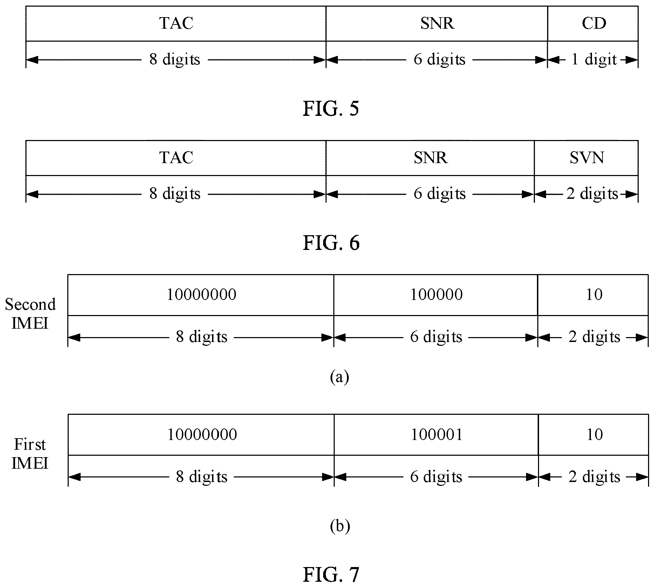

It is assumed that a format of the first IMEI may be shown in FIG. 5, and the first IMEI includes an eight-digit TAC field, a six-digit serial number (serial number, SNR) field, and a one-digit check digit (check digit, CD) field. In this case, that the capability identifier of the terminal includes at least one component of a first IMEI includes: the capability identifier of the terminal includes the TAC in the first IMEI; or the capability identifier of the terminal includes the TAC and the SNR in the first IMEI; or the capability identifier of the terminal includes the TAC, the SNR, and the CD in the first IMEI. This is not specifically limited in this embodiment of this application.

Alternatively, it is assumed that a format of the first IMEI may be shown in FIG. 6, and the first IMEI includes an eight-digit TAC field, a six-digit SNR field, and a two-digit SVN field. In this case, that the capability identifier of the terminal includes at least one component of a first IMEI includes: the capability identifier of the terminal includes the TAC in the first IMEI; or the capability identifier of the terminal includes the TAC and the SNR in the first IMEI; or the capability identifier of the terminal includes the TAC, the SNR, and the SVN in the first IMEI. This is not specifically limited in this embodiment of this application.

The TAC in FIG. 5 or FIG. 6 is a code used to distinguish a brand and a model of the terminal, and the code is allocated by the global system for mobile communications association (global system for mobile communications assembly, GSMA) and its authorized organization. The SNR in FIG. 5 or FIG. 6 is a serial number generated by a production line of a terminal vendor. The CD in FIG. 5 is usually determined by using both the TAC and the SNR, and is used to verify correctness of the TAC and the SNR. The SVN in FIG. 6 is usually a software version number obtained during a test on a part related to forward communication before the terminal is delivered. For detailed descriptions about the fields related to the first IMEI, refer to existing descriptions about an IMEI. Details are not described herein.

Optionally, in this embodiment of this application, at least one component of the capability identifier of the terminal may be the same as or different from at least one component of a second IMEI. This is not specifically limited in this embodiment of this application. The second IMEI is an IMEI of the terminal.

For example, it is assumed that a format of the IMEI of the terminal is shown in FIG. 6, and the IMEI of the terminal is specifically shown in (a) in FIG. 7, and is 10000000 100000 10. To be specific, in the second IMEI, eight digits of a TAC field are 10000000, six digits of an SNR field are 100000, and two digits of an SVN field are 10. When the first IMEI is specifically shown in (b) in FIG. 7, and is 10000000 100001 10:
if the capability identifier of the terminal includes the TAC in the first IMEI, in other words, the capability identifier of the terminal is 10000000, the capability identifier of the terminal is the same as the TAC part in the second IMEI;
if the capability identifier of the terminal includes the TAC and the SNR in the first IMEI, that is, the capability identifier of the terminal is 10000000 100001, the TAC part in the capability identifier of the terminal is the same as the TAC part in the second IMEI, and the SNR part in the capability identifier of the terminal is different from the SNR part in the second IMEI; or
if the capability identifier of the terminal includes the TAC, the SNR, and the SVN in the first IMEI, in other words, the capability identifier of the terminal is 10000000 100001 10, the TAC part in the capability identifier of the terminal is the same as the TAC part in the second IMEI, the SNR part in the capability identifier of the terminal is different from the SNR part in the second IMEI, and the SVN part in the capability identifier of the terminal is the same as the SVN part in the second IMEI.

Certainly, FIG. 7 is merely an example for description. The first IMEI and the second IMEI may be alternatively other identifiers. This is not specifically limited in this embodiment of this application.

Optionally, the first IMEI and the second IMEI in this embodiment of this application may be the same, or may be different. This is not specifically limited in this embodiment of this application.

Optionally, the first IMEI in this embodiment of this application is an IMEI used by a terminal device vendor corresponding to the terminal. To be specific, the first IMEI and the second IMEI in this embodiment of this application are IMEIs available for a same terminal device vendor. For example, both are IMEIs in an IMEI resource pool allocated to a same terminal vendor. This is uniformly described herein, and details are not described below again.

It should be noted that there is no necessary execution sequence between step S303 and step S301 in this embodiment of this application. Step S301 may be performed before step S303, or step S303 may be performed before step S301, or steps S301 and S303 may be performed simultaneously. This is not specifically limited in this embodiment of this application.

S304. The terminal sends an RRC connection request (RRC connection request) message to the gNB, so that the gNB receives the RRC connection request message sent by the terminal.

S305. The gNB sends an RRC connection setup (RRC connection setup) message to the terminal, so that the terminal receives the RRC connection setup message sent by the gNB.

S306. The terminal sends an RRC connection setup complete (RRC connection setup complete) message to the gNB, so that the gNB receives the RRC connection setup complete message sent by the terminal.

In this embodiment of this application, the RRC connection request message in step S304 or the RRC connection setup complete message in step S306 may carry the capability identifier of the terminal that is determined in step S303. This is not specifically limited in this embodiment of this application.

Alternatively, optionally, in this embodiment of this application, the capability identifier of the terminal may be carried in a non-access stratum (non-access stratum, NAS) message. For example, the capability identifier of the terminal may be carried in a NAS message in the RRC connection setup complete message in step S306. The gNB may transparently transmit the NAS message to the AMF network element. This is not specifically limited in this embodiment of this application.

If the RRC connection setup complete message in step S306 or the NAS message in the RRC connection setup complete message in step S306 carries the capability identifier of the terminal that is determined in step S303, there is no necessary execution sequence between step S303 and step S304. Step S303 may be performed before step S304, or step S304 may be performed before step S303, or step S303 and step S304 may be performed simultaneously. This is not specifically limited in this embodiment of this application.

Steps S301 to S306 provide specific implementation of reporting, by the terminal, the capability identifier of the terminal to the gNB in an RRC connection setup process. Optionally, the communication capability reporting method provided in this embodiment of this application may further include the following step:

S307. The gNB sends an initial terminal message (initiate UE message) to the AMF network element, so that the AMF network element receives the initial terminal message sent by the gNB.

The initial terminal message carries the capability identifier of the terminal.

Optionally, if the capability identifier of the terminal that is sent by the terminal to the gNB is carried in the NAS message, the initial terminal message in this case includes the NAS message. This is not specifically limited in this embodiment of this application.

After receiving the initial terminal message sent by the gNB, the AMF network element may search whether the AMF network element stores a communication capability of the terminal that corresponds to the capability identifier of the terminal. Assuming that the AMF network element does not store the communication capability of the terminal that corresponds to the capability identifier of the terminal, the communication capability reporting method provided in this embodiment of this application may further include the following steps S308 to S314.

S308. The AMF network element sends a terminal context setup request (UE context setup request) to the gNB, so that the gNB receives the terminal context setup request sent by the AMF network element.

Optionally, the terminal context setup request in this embodiment of this application may further carry the capability identifier of the terminal that is determined in step S303. This is not specifically limited in this embodiment of this application.

S309. The gNB sends a terminal context setup response (UE context setup response) to the AMF network element, so that the AMF network element receives the terminal context setup response sent by the gNB.

S310. The gNB sends a terminal capability enquiry (UE capability enquiry) to the terminal, so that the terminal receives the terminal capability enquiry sent by the gNB.

Optionally, the terminal capability enquiry in this embodiment of this application may further carry the capability identifier of the terminal. This is not specifically limited in this embodiment of this application.

S311. The terminal sends terminal capability information (UE capability information) to the gNB, so that the gNB receives the terminal capability information from the terminal.

The terminal capability information includes the communication capability of the terminal.

Optionally, the terminal capability information may further include the capability identifier of the terminal that corresponds to the communication capability of the terminal. This is not specifically limited in this embodiment of this application.

S312. The gNB stores the communication capability of the terminal.

S313. The gNB sends a terminal capability information indication (UE capability information indication) to the AMF network element, so that the AMF network element receives the terminal capability information indication sent by the gNB.

The terminal capability information indication includes the communication capability of the terminal.

Optionally, the terminal capability information indication in this embodiment of this application may further include the capability identifier of the terminal that corresponds to the communication capability of the terminal. This is not specifically limited in this embodiment of this application.

S314. The AMF network element stores a correspondence between the capability identifier of the terminal and the communication capability of the terminal.

It should be noted that, in this embodiment of this application, the correspondence that is between the capability identifier of the terminal and the communication capability of the terminal and that is stored on the AMF network element may include the capability identifier of the terminal, and the communication capability corresponding to the capability identifier of the terminal. For example, a plurality of correspondences stored on the AMF network element may be shown in Table 1.

**Table 1**

| Capability identifier | Communication capability |
|---|---|
| Identifier 1 | Communication capability 1 |
| Identifier 2 | Communication capability 2 |
| Identifier 3 | Communication capability 3 |
| ... | ... |

Certainly, Table 1 merely provides an example manner of storing a correspondence between a communication capability of a terminal and a capability identifier of the terminal, and there may be another storage form. This is not specifically limited in this embodiment of this application.

Alternatively, optionally, assuming that the AMF network element stores the communication capability of the terminal that corresponds to the capability identifier of the terminal, the communication capability reporting method provided in this embodiment of this application may further include the following steps S315 to S317.

S315. The AMF network element determines the communication capability of the terminal based on the capability identifier of the terminal and the stored correspondence between the capability identifier of the terminal and the communication capability of the terminal.

S316. The AMF network element sends a terminal context setup request to the gNB, so that the gNB receives the terminal context setup request sent by the AMF network element.

The terminal context setup request carries the communication capability of the terminal.

S317. The gNB stores the communication capability of the terminal.

Steps S308 to S314 may be applied to a procedure in which the terminal initially registers with a network. Steps S315 to S317 may be applied to a procedure in which the terminal switches from an idle state to a connected state, or steps S315 to S317 may be applied to a procedure in which the terminal is handed over from one gNB to another gNB. This is not specifically limited in this embodiment of this application.

Optionally, the communication capability reporting method provided in this embodiment of this application may further include the following step:
S318. The gNB sends an RRC reconfiguration message (RRC reconfiguration message) to the terminal, so that the terminal receives the RRC reconfiguration message sent by the gNB.

For a related implementation of step S318, refer to an existing implementation. Details are not described herein.

According to the communication capability reporting method provided in this embodiment of this application, when the communication capability needs to be reported, the capability identifier of the terminal that is sent by the terminal to the gNB is one of the one or more capability identifiers corresponding to the terminal. In other words, in this embodiment of this application, different capability identifiers may be used for one terminal. Therefore, when the communication capability of the terminal is associated with the capability identifier of the terminal, the terminal may update its own communication capability in a timely manner by using the capability identifier determined in the one or more capability identifiers corresponding to the terminal.

The actions of the terminal or the gNB in the foregoing steps S301 to S318 may be performed by the processor 201 in the communications device 200 shown in FIG. 2 by invoking the application program code stored in the memory 203. This is not limited in this embodiment.

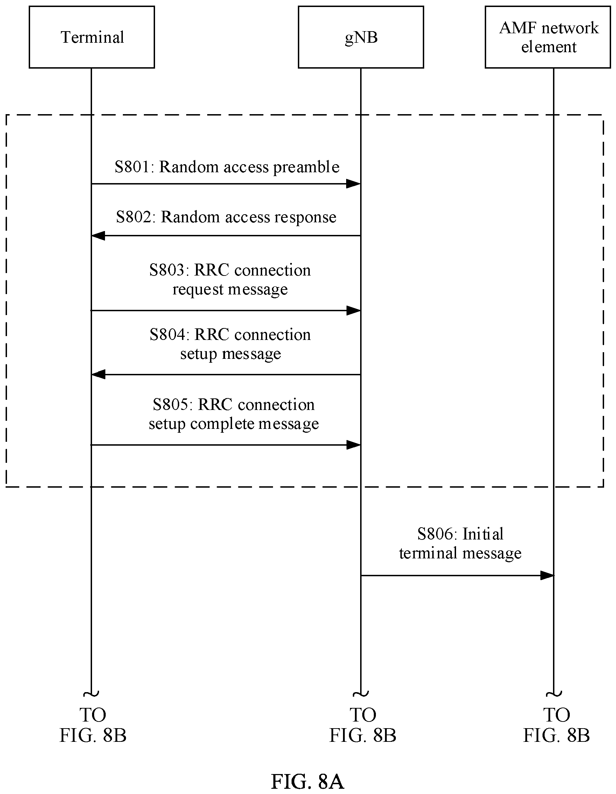

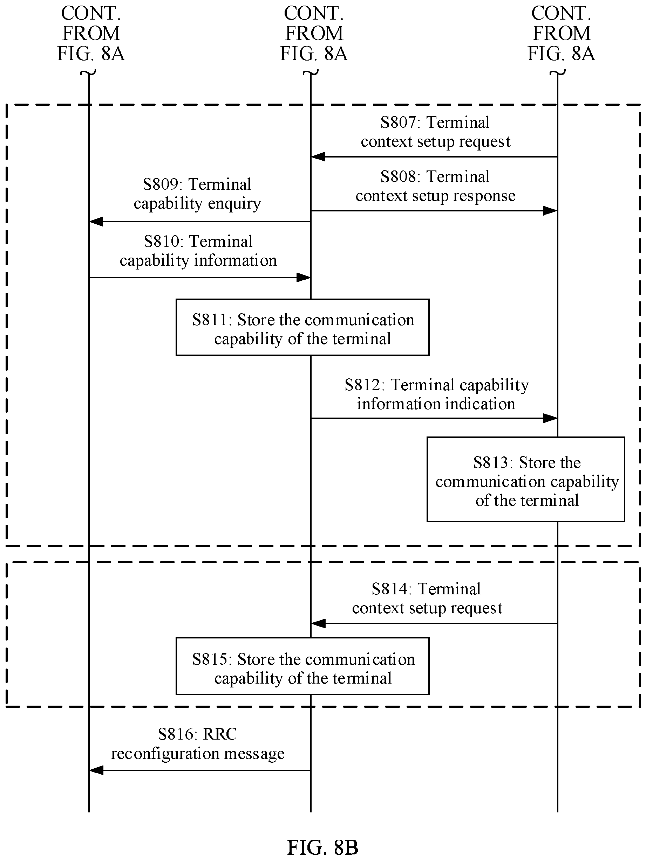

The embodiment shown in FIG. 3A and FIG. 3B is described by using an example in which the communication capability of the terminal is associated with the capability identifier of the terminal, in other words, the terminal supports reporting the capability identifier of the terminal. Optionally, in this embodiment of this application, if the terminal vendor does not maintain the correspondence between the capability identifier of the terminal and the communication capability of the terminal, the terminal of the terminal vendor cannot report the capability identifier of the terminal by using an RRC message or a NAS message. In this case, the communication capability reporting method provided in this embodiment of this application may include the following steps, as shown in FIG. 8A and FIG. 8B.

S801 and S802 are the same as steps S301 and S302. For related descriptions, refer to the embodiment shown in FIG. 3A and FIG. 3B. Details are not described herein again.

S803 to S805 are similar to steps S303 to S306. A difference lies in, for example: An RRC message, for example, an RRC connection request message or an RRC connection setup complete message, in this embodiment of this application does not carry the capability identifier of the terminal, but may carry indication information, where the indication information is used to indicate that the terminal does not support reporting the capability identifier of the terminal; or a NAS message, for example, a NAS message in an RRC connection setup complete message, in this embodiment of this application does not carry the capability identifier of the terminal, but may carry indication information, where the indication information is used to indicate that the terminal does not support reporting the capability identifier of the terminal. For related descriptions, refer to the embodiment shown in FIG. 3A and FIG. 3B. Details are not described herein again.

Optionally, in a possible implementation, the indication information may perform indication by using one or more bits. For example, the bit being 0 indicates that the terminal does not support reporting the capability identifier of the terminal, or the bit being 1 indicates that the terminal does not support reporting the capability identifier of the terminal.

Optionally, in another possible implementation, all fields of the capability identifier of the terminal may be alternatively set to 0 to indicate that the terminal does not support reporting the capability identifier of the terminal. An implementation of the indication information is not specifically limited in this embodiment of this application.

Steps S801 to S805 provide specific implementation of reporting, by the terminal to the gNB in an RRC connection setup process, the indication information indicating that the terminal does not support reporting the capability identifier of the terminal. Further, the communication capability reporting method provided in this embodiment of this application may further include the following step:

S806. The gNB sends an initial terminal message to the AMF network element, so that the AMF network element receives the initial terminal message sent by the gNB.

The initial terminal message carries the indication information.

Optionally, if the indication information sent by the terminal to the gNB is carried in a NAS message, the initial terminal message in this case includes the NAS message. This is not specifically limited in this embodiment of this application.

Further, the initial terminal message in this embodiment of this application may further carry an identifier of the terminal. After learning that the terminal does not support reporting the capability identifier of the terminal, the AMF network element may query for a corresponding communication capability of the terminal based on the identifier of the terminal.

Assuming that the AMF network element does not store the communication capability of the terminal, the communication capability reporting method provided in this embodiment of this application may further include the following steps S807 to S813.

S807. The AMF network element sends a terminal context setup request (UE context setup request) to the gNB, so that the gNB receives the terminal context setup request sent by the AMF network element.

S808. The gNB sends a terminal context setup response (UE context setup response) to the AMF network element, so that the AMF network element receives the terminal context setup response sent by the gNB.

S809. The gNB sends a terminal capability enquiry (UE capability enquiry) to the terminal, so that the terminal receives the terminal capability enquiry sent by the gNB.

S810. The terminal sends terminal capability information (UE capability information) to the gNB, so that the gNB receives the terminal capability information from the terminal.

The terminal capability information includes the communication capability of the terminal.

S811. The gNB stores the communication capability of the terminal.

S812. The gNB sends a terminal capability information indication (UE capability information indication) to the AMF network element, so that the AMF network element receives the terminal capability information indication sent by the gNB.

The terminal capability information indication includes the communication capability of the terminal.

S813. The AMF network element stores the communication capability of the terminal.

For example, communication capabilities, stored on the AMF network element, of a plurality of terminals may be shown in Table 2.

**Table 2**

| Terminal identifier | Communication capability |
|---|---|
| Identifier 1 | Communication capability 1 |
| Identifier 2 | Communication capability 2 |
| Identifier 3 | Communication capability 3 |
| ... | ... |

Certainly, Table 2 merely provides an example manner of storing a communication capability of a terminal, and there may be another storage form. This is not specifically limited in this embodiment of this application.

Alternatively, optionally, assuming that the AMF network element stores the communication capability of the terminal, the communication capability reporting method provided in this embodiment of this application may further include the following steps S814 and S815.

S814. The AMF network element sends a terminal context setup request to the gNB, so that the gNB receives the terminal context setup request sent by the AMF network element.

The terminal context setup request carries the communication capability of the terminal.

S815. The gNB stores the communication capability of the terminal.

Steps S807 to S813 may be applied to a procedure in which the terminal initially registers with a network. Steps S814 and S815 may be applied to a procedure in which the terminal switches from an idle state to a connected state, or steps S814 and S815 may be applied to a procedure in which the terminal is handed over from one gNB to another gNB. This is not specifically limited in this embodiment of this application.

Optionally, the communication capability reporting method provided in this embodiment of this application may further include the following step:

S816. The gNB sends an RRC reconfiguration message to the terminal, so that the terminal receives the RRC reconfiguration message sent by the gNB.

In the communication capability reporting method provided in this embodiment of this application, when the communication capability needs to be reported, if the terminal does not support reporting the capability identifier of the terminal, the terminal sends, to the AMF network element in a core network by using the gNB, the indication information indicating that the terminal does not support reporting the capability identifier of the terminal. In this way, the AMF network element may learn that the terminal does not support reporting the capability identifier of the terminal, and therefore does not search for a corresponding communication capability of the terminal based on the capability identifier of the terminal; instead, when learning, based on the identifier of the terminal, that the AMF network element does not store the communication capability of the terminal, the AMF network element queries for the communication capability of the terminal from the terminal, so that the terminal then reports the communication capability of the terminal. According to this solution, the communication capability of the terminal can be reported without supporting reporting the capability identifier of the terminal.

The actions of the terminal or the gNB in the foregoing steps S801 to S816 may be performed by the processor 201 in the communications device 200 shown in FIG. 2 by invoking the application program code stored in the memory 203. This is not limited in this embodiment.

It should be noted that FIG. 3A, FIG. 3B, FIG. 8A, and FIG. 8B are described by using an example in which a first communications device is a terminal in a 5G NR system and a second communications device is a gNB in the 5G NR system. Certainly, as described above, the second communications device may be alternatively a terminal in the 5G NR system, for example, relay user equipment. In this case, a corresponding communication capability reporting method is similar to that in FIG. 3A and FIG. 3B or in FIG. 8A and FIG. 8B. A difference lies in, for example: An equivalent forwarding device is added between the terminal and the gNB shown in FIG. 3A and FIG. 3B or in FIG. 8A and FIG. 8B, and the second communications device mainly forwards received information, for example, the capability identifier of the terminal or the communication capability of the terminal. For other related descriptions, refer to the embodiment shown in FIG. 3A and FIG. 3B or in FIG. 8A and FIG. 8B. Details are not described again in this embodiment of this application.

The foregoing describes the solutions provided in the embodiments of this application mainly from a perspective of interaction between network elements. It can be understood that, to implement the foregoing functions, the first communications device or the second communications device includes corresponding hardware structures and/or software modules for executing the functions. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, functional modules of the first communications device or the second communications device may be divided based on the foregoing method examples. For example, the functional modules may be divided based on the functions, or at least two functions may be integrated in one processing module. The integrated module may be implemented in a form of hardware, or may be implemented in a form of a software functional module. It should be noted that, in this embodiment of this application, module division is exemplary, and is merely a logical function division. In actual implementation, another division manner may be used.

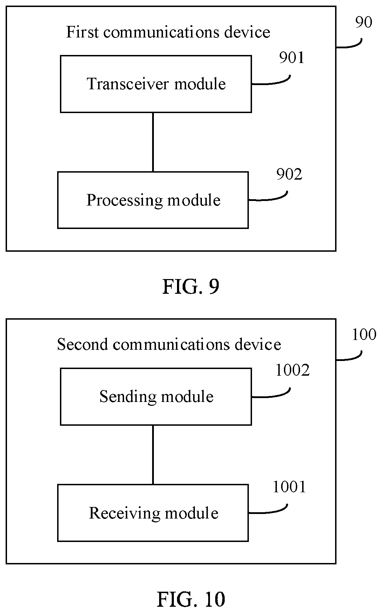

For example, when the functional modules are divided through integration, FIG. 9 shows a schematic diagram of a structure of a first communications device 90. The first communications device 90 may be the terminal in the foregoing embodiments, or may be a chip system or a circuit in the terminal in the foregoing embodiments. This is not specifically limited in this embodiment of this application. The first communications device 90 includes a processing module 902 and a transceiver module 901. The processing module 902 is configured to determine a capability identifier of the first communications device 90, where the capability identifier of the first communications device 90 is one of one or more capability identifiers corresponding to the first communications device 90. The transceiver module 901 is configured to send the capability identifier of the first communications device 90 to a second communications device, where the capability identifier of the first communications device 90 is used to determine a communication capability of the first communications device 90.

Optionally, the capability identifier of the first communications device 90 includes at least one component of a first IMEI.

Optionally, that the capability identifier of the first communications device 90 includes at least one component of a first IMEI includes: the capability identifier of the first communications device 90 includes a TAC in the first IMEI; or the capability identifier of the first communications device 90 includes a TAC and a serial number SNR in the first IMEI; or the capability identifier of the first communications device 90 includes a TAC, an SNR, and an SVN in the first IMEI; or the capability identifier of the first communications device 90 includes a TAC, an SNR, and a CD in the first IMEI.

Optionally, at least one component of the capability identifier of the first communications device 90 is different from at least one component of a second IMEI, and the second IMEI is an IMEI of the first communications device 90.

Optionally, the first IMEI is an IMEI used by a vendor to which the first communications device 90 belongs.

Optionally, the capability identifier of the first communications device 90 is different from a capability identifier of a third communications device, and the third communications device and the first communications device 90 are communications devices of different vendors.

Optionally, the transceiver module 901 is specifically configured to send a first RRC message or a first NAS message to the second communications device, where the first RRC message or the first NAS message includes the capability identifier of the first communications device 90.

Optionally, the processing module 902 is specifically configured to: when the first communications device 90 supports reporting the capability identifier of the first communications device 90, determine the capability identifier of the first communications device 90.

Further, the transceiver module 901 is further configured to: when the first communications device 90 does not support reporting the capability identifier of the first communications device 90, send indication information to the second communications device, where the indication information is used to indicate that the first communications device 90 does not support reporting the capability identifier of the first communications device 90.

Optionally, that the transceiver module 901 is configured to send indication information to the second communications device includes: the transceiver module 901 is configured to send a second RRC message or a second NAS message to the second communications device, where the second RRC message or the second NAS message includes the indication information.

For function descriptions of corresponding functional modules, refer to all related content of the steps in the foregoing method embodiments. Details are not described herein again.

In this embodiment, the first communications device 90 is presented by dividing the functional modules through integration. Herein, the "module" may be a specific ASIC, a circuit, a processor that executes one or more software or firmware programs, a memory, an integrated logic circuit, and/or another device that can provide the foregoing functions.

In a simple embodiment, a person skilled in the art may figure out that the first communications device 90 may be in the form shown in FIG. 2.

For example, the processor 201 in FIG. 2 may invoke the computer executable instruction stored in the memory 203, so that the first communications device 90 performs the communication capability reporting method in the foregoing method embodiments.

Specifically, functions and implementation processes of the processing module 902 and the transceiver module 901 in FIG. 9 may be implemented by the processor 201 in FIG. 2 by invoking the computer executable instruction stored in the memory 203. Alternatively, a function and an implementation process of the processing module 902 in FIG. 9 may be implemented by the processor 201 in FIG. 2 by invoking the computer executable instruction stored in the memory 203; and a function and an implementation process of the transceiver module 901 in FIG. 9 may be implemented by the communications interface 204 in FIG. 2.

Optionally, when the first communications device 90 is a chip or a circuit, the memory 203 may be a storage unit in the chip or the circuit, for example, a register or a cache. Certainly, when the first communications device 90 is a terminal, the memory 203 may be a storage unit that is in the terminal and that is outside a chip. This is not specifically limited in this embodiment of this application.

The first communications device provided in this embodiment of this application may be configured to perform the foregoing communication capability reporting method. Therefore, for a technical effect that can be achieved by the first communications device, refer to the foregoing method embodiments. Details are not described herein again.

For example, when the functional modules are divided through integration, FIG. 10 shows a schematic diagram of a structure of a second communications device 100. The second communications device 100 may include the terminal in the foregoing embodiments, or may be a chip or a circuit in the terminal in the foregoing embodiments, or may be the access device (for example, the gNB) in the foregoing embodiments, or may be a chip system or a circuit in the access device in the foregoing embodiments. This is not specifically limited in this embodiment of this application. The second communications device 100 includes a receiving module 1001 and a sending module 1002. The receiving module 1001 is configured to receive a capability identifier of a first communications device that is sent by the first communications device, where the capability identifier of the first communications device is one of one or more capability identifiers corresponding to the first communications device. The sending module 1002 is configured to send the capability identifier of the first communications device to a network device, where the capability identifier of the first communications device is used to determine a communication capability of the first communications device.

Optionally, the capability identifier of the first communications device includes at least one component of a first IMEI.

Optionally, that the capability identifier of the first communications device includes at least one component of a first IMEI includes: the capability identifier of the first communications device includes a TAC in the first IMEI; or the capability identifier of the first communications device includes a TAC and an SNR in the first IMEI; or the capability identifier of the first communications device includes a TAC, an SNR, and an SVN in the first IMEI; or the capability identifier of the first communications device includes a TAC, an SNR, and a CD in the first IMEI.

Optionally, at least one component of the capability identifier of the first communications device is different from at least one component of a second IMEI, and the second IMEI is an IMEI of the first communications device.

Optionally, the first IMEI is an IMEI used by a vendor to which the first communications device belongs.

Optionally, the capability identifier of the first communications device is different from a capability identifier of a third communications device, and the third communications device and the first communications device are communications devices of different vendors.

Optionally, the receiving module 1001 is further configured to receive the communication capability of the first communications device that is sent by the network device.

Optionally, the receiving module 1001 is further configured to receive a first message sent by the network device, where the first message is used to request the communication capability of the first communications device; the sending module 1002 is further configured to send a second message to the first communications device, where the second message is used to request the communication capability of the first communications device; and the receiving module 1001 is further configured to receive the communication capability of the first communications device that is sent by the first communications device.

Optionally, the first message in this embodiment of this application may carry the capability identifier of the first communications device. This is not specifically limited in this embodiment of this application.

Optionally, the second message in this embodiment of this application may carry the capability identifier of the first communications device. This is not specifically limited in this embodiment of this application.

Optionally, the sending module 1002 is further configured to send the communication capability of the first communications device to the network device, so that the network device stores a correspondence between the capability identifier of the first communications device and the communication capability of the first communications device.

Optionally, the receiving module 1001 is further configured to receive the capability identifier of the first communications device that is sent by the first communications device and that corresponds to the communication capability of the first communications device.

Optionally, the sending module 1002 is further configured to send, to the network device, the communication capability of the first communications device, and the capability identifier of the first communications device that corresponds to the communication capability of the first communications device, so that the network device stores a correspondence between the capability identifier of the first communications device and the communication capability of the first communications device.

Optionally, that the receiving module 1001 is configured to receive a capability identifier of a first communications device that is sent by the first communications device includes: the receiving module 1001 is configured to: when the first communications device supports reporting the capability identifier of the first communications device, receive the capability identifier of the first communications device that is sent by the first communications device.

Optionally, the receiving module 1001 is further configured to: when the first communications device does not support reporting the capability identifier of the first communications device, receive indication information sent by the first communications device, where the indication information is used to indicate that the first communications device does not support reporting the capability identifier of the first communications device.

Optionally, that the receiving module 1001 is configured to receive indication information sent by the first communications device includes: the receiving module 1001 is configured to receive a first RRC message or a first NAS message sent by the first communications device, where the first RRC message or the first NAS message includes the indication information.

Optionally, that the receiving module 1001 is configured to receive a capability identifier of a first communications device that is sent by the first communications device includes: the receiving module 1001 is configured to receive a second RRC message or a second NAS message sent by the first communications device, where the second RRC message or the second NAS message includes the capability identifier of the first communications device.

For function descriptions of corresponding functional modules, refer to all related content of the steps in the foregoing method embodiments. Details are not described herein again.

In this embodiment, the second communications device 100 is presented by dividing the functional modules through integration. Herein, the "module" may be a specific ASIC, a circuit, a processor that executes one or more software or firmware programs, a memory, an integrated logic circuit, and/or another device that can provide the foregoing functions.

In a simple embodiment, a person skilled in the art may figure out that the second communications device 100 may be in the form shown in FIG. 2.

For example, the processor 201 in FIG. 2 may invoke the computer executable instruction stored in the memory 203, so that the second communications device 100 performs the communication capability reporting method in the foregoing method embodiments.

Specifically, functions and implementation processes of the receiving module 1001 and the sending module 1002 in FIG. 10 may be implemented by the processor 201 in FIG. 2 by invoking the computer executable instruction stored in the memory 203. Alternatively, functions and implementation processes of the receiving module 1001 and the sending module 1002 in FIG. 10 may be implemented by the communications interface 204 in FIG. 2.

Optionally, when the second communications device 100 is a chip or a circuit, the memory 203 may be a storage unit in the chip or the circuit, for example, a register or a cache. Certainly, when the second communications device 100 is an access device, the memory 203 may be a storage unit that is in the access device and that is outside a chip. This is not specifically limited in this embodiment of this application.

The second communications device provided in this embodiment of this application may be configured to perform the foregoing communication capability reporting method. Therefore, for a technical effect that can be achieved by the second communications device, refer to the foregoing method embodiments. Details are not described herein again.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Although this application is described with reference to the embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

## Claims

1. A first communications device (90), wherein the first communications device (90) being a first terminal device comprises a processing module (901) and a transceiver module (902);
the processing module is configured to determine a capability identifier of the first communications device, wherein the capability identifier of the first communications device is one of one or more capability identifiers corresponding to the first communications device; and
the transceiver module is configured to send the capability identifier of the first communications device to a second communications device (100), wherein the capability identifier of the first communications device (90) is used to determine a communication capability of the first communications device (90);
wherein the processing module is specifically configured to:
when the first communications device (90) supports reporting the capability identifier of the first communications device (90), determine the capability identifier of the first communications device (90) and send the capability identifier to the second communications device (100), and wherein
when the first communications device (90) does not support reporting the capability identifier of the first communications device (90), the first communications device (90) is configured to send indication information to the second communications device (100), wherein the indication information is used to indicate that the first communications device (90) does not support reporting the capability identifier of the first communications device (90).

2. The first communications device (90) according to claim 1, wherein the capability identifier of the first communications device (90) comprises at least one component of a first international mobile equipment identity (IMEI), wherein that the capability identifier of the first communications device (90) comprises the at least one component of the first IMEI comprises:
the capability identifier of the first communications device (90) comprises a type allocation code TAC in the first IMEI.

3. The first communications device (90) according to any one of claims 1 or 2, wherein the transceiver module is specifically configured to:
send a first radio resource control RRC message or a first non-access stratum NAS message to the second communications device (100), wherein the first RRC message or the first NAS message comprises the capability identifier of the first communications device (90).

4. The first communications device (90) according to any one of claims 1 to 3, wherein the capability identifier of the first terminal device is carried in a NAS message in a RRC connection setup complete message.

5. A communication capability reporting method, performed by a first terminal being a first communications device, the method comprising:
determining (S303), by the first terminal device, a capability identifier of the first communications device (90), wherein the capability identifier of the first communications device (90) is one of one or more capability identifiers corresponding to the first communications device (90); and
sending, by the first terminal device, the capability identifier of the first communications device (90) to a second communications device (100), wherein the capability identifier of the first communications device (90) is used to determine a communication capability of the first communications device (90);
wherein the method further comprises:
when the first communications device is supporting reporting the capability identifier of the first communication device, determining the capability identifier of the first communications device and sending the capability identifier to the second communications device and wherein
when the first communications device (90) does not support reporting the capability identifier of the first communications device (90), sending, by the first terminal device, indication information to the second communications device (100), wherein the indication information is used to indicate that the first communications device (90) does not support reporting the capability identifier of the first communications device (90).

6. The method according to claim 5, wherein
the capability identifier of the first communications device (90) comprises at least one component of a first international mobile equipment identity (IMEI).

7. The method according to claim 6, wherein that the capability identifier of the first communications device (90) comprises the at least one component of the first IMEI comprises:
the capability identifier of the first communications device (90) comprises a type allocation code TAC in the first IMEI; or
the capability identifier of the first communications device (90) comprises a TAC and a serial number SNR in the first IMEI; or
the capability identifier of the first communications device (90) comprises a TAC, an SNR, and a software version number SVN in the first IMEI; or
the capability identifier of the first communications device (90) comprises a TAC, an SNR, and a check digit CD in the first IMEI.

8. The method according to claim 6 or 7, wherein at least one component of the capability identifier of the first communications device (90) is different from at least one component of a second IMEI, and the second IMEI is an IMEI of the first communications device (90).

9. The method according to any one of claims 6 to 8, wherein the first IMEI is an IMEI used by a vendor to which the first communications device (90) belongs.

10. The method according to any one of claims 5 to 9, wherein the capability identifier of the first communications device (90) is different from a capability identifier of a third communications device, and the third communications device and the first communications device (90) are communications devices of different vendors.

11. The method according to any one of claims 5 to 10, wherein the method further comprises:
sending, by the first terminal device, a first radio resource control RRC message or a first non-access stratum NAS message to the second communications device (100), wherein the first RRC message or the first NAS message comprises the capability identifier of the first communications device (90).

12. The method according to any one of claims 5 to 11, wherein the capability identifier of the first communications device is carried in a NAS message in a RRC connection setup complete message.

13. The method according to claim 12, wherein the method further comprises:
the sending, by the first terminal device, indication information to the second communications device (100) comprises: sending a second RRC message or a second NAS message to the second communications device (100), wherein the second RRC message or the second NAS message comprises the indication information.

14. A first communications device (200), comprising a processor (201) and a memory (203), wherein the memory is configured to store a computer-executable instruction, and when the first communications device (90) runs, the processor executes the computer-executable instruction stored in the memory, so that the first communications device (90) performs the communication capability reporting method according to claims 5 to 13

## Patentansprüche

1. Erste Kommunikationsvorrichtung (90), wobei die erste Kommunikationsvorrichtung (90), bei der es sich um eine erste Endgerätevorrichtung handelt, ein Verarbeitungsmodul (901) und ein Sendeempfängermodul (902) umfasst;
das Verarbeitungsmodul dazu konfiguriert ist, eine Kompetenzkennung der ersten Kommunikationsvorrichtung zu bestimmen, wobei die Kompetenzkennung der ersten Kommunikationsvorrichtung eine von einer oder mehreren Kompetenzkennungen ist, die der ersten Kommunikationsvorrichtung entsprechen; und
das Sendeempfängermodul dazu konfiguriert ist, die Kompetenzkennung der ersten Kommunikationsvorrichtung an eine zweite Kommunikationsvorrichtung (100) zu senden, wobei die Kompetenzkennung der ersten Kommunikationsvorrichtung (90) dazu verwendet wird, eine Kommunikationskompetenz der ersten Kommunikationsvorrichtung (90) zu bestimmen;
wobei das Verarbeitungsmodul insbesondere zu Folgendem konfiguriert ist:
wenn die erste Kommunikationsvorrichtung (90) ein Melden der Kompetenzkennung der ersten Kommunikationsvorrichtung (90) unterstützt, Bestimmen der Kompetenzkennung der ersten Kommunikationsvorrichtung (90) und Senden der Kompetenzkennung an die zweite Kommunikationsvorrichtung (100) und wobei,
wenn die erste Kommunikationsvorrichtung (90) das Melden der Kompetenzkennung der ersten Kommunikationsvorrichtung (90) nicht unterstützt, die erste Kommunikationsvorrichtung (90) dazu konfiguriert ist, Anzeigeinformationen an die zweite Kommunikationsvorrichtung (100) zu senden, wobei die Anzeigeinformationen dazu verwendet werden, anzuzeigen, dass die erste Kommunikationsvorrichtung (90) das Melden der Kompetenzkennung der ersten Kommunikationsvorrichtung (90) nicht unterstützt.

2. Erste Kommunikationsvorrichtung (90) nach Anspruch 1, wobei die Kompetenzkennung der ersten Kommunikationsvorrichtung (90) mindestens eine Komponente einer ersten International Mobile Equipment Identity (IMEI) umfasst, wobei, dass die Kompetenzkennung der ersten Kommunikationsvorrichtung (90) die mindestens eine Komponente der ersten IMEI umfasst, Folgendes umfasst:
die Kompetenzkennung der ersten Kommunikationsvorrichtung (90) umfasst einen Typzuordnungscode, TAC, in der ersten IMEI.

3. Erste Kommunikationsvorrichtung (90) nach einem der Ansprüche 1 oder 2, wobei das Sendeempfängermodul insbesondere zu Folgendem konfiguriert ist:
Senden einer ersten Radio-Resource-Control-Nachricht, RRC-Nachricht, oder einer ersten Non-Access Stratum-Nachricht, NAS-Nachricht, an die zweite Kommunikationsvorrichtung (100), wobei die erste RRC-Nachricht oder die erste NAS-Nachricht die Kompetenzkennung der ersten Kommunikationsvorrichtung (90) umfasst.

4. Erste Kommunikationsvorrichtung (90) nach einem der Ansprüche 1 bis 3, wobei die Kompetenzkennung der ersten Endgerätevorrichtung in einer NAS-Nachricht in einer RRC-Verbindungsaufbauabschlussnachricht übermittelt wird.

5. Verfahren zum Melden der Kommunikationskompetenz, das durch ein erstes Endgerät durchgeführt wird, bei dem es sich um eine erste Kommunikationsvorrichtung handelt, wobei das Verfahren Folgendes umfasst:
Bestimmen (S303), durch die erste Endgerätevorrichtung, einer Kompetenzkennung der ersten Kommunikationsvorrichtung (90), wobei die Kompetenzkennung der ersten Kommunikationsvorrichtung (90) eine von einer oder mehreren Kompetenzkennungen ist, die dem ersten Kommunikationsvorrichtung (90) entsprechen; und
Senden, durch die erste Endgerätevorrichtung, der Kompetenzkennung der ersten Kommunikationsvorrichtung (90) an eine zweite Kommunikationsvorrichtung (100), wobei die Kompetenzkennung der ersten Kommunikationsvorrichtung (90) dazu verwendet wird, eine Kommunikationskompetenz der ersten Kommunikationsvorrichtung (90) zu bestimmen;
wobei das Verfahren ferner Folgendes umfasst:
wenn die erste Kommunikationsvorrichtung das Melden der Kompetenzkennung der ersten Kommunikationsvorrichtung unterstützt, Bestimmen der Kompetenzkennung der ersten Kommunikationsvorrichtung und Senden der Kompetenzkennung an die zweite Kommunikationsvorrichtung und wobei,
wenn die erste Kommunikationsvorrichtung (90) das Melden der Kompetenzkennung der ersten Kommunikationsvorrichtung (90) nicht unterstützt, Senden, durch die erste Endgerätevorrichtung, von Anzeigeinformationen an die zweite Kommunikationsvorrichtung (100), wobei die Anzeigeinformationen dazu verwendet werden, anzuzeigen, dass die erste Kommunikationsvorrichtung (90) das Melden der Kompetenzkennung der ersten Kommunikationsvorrichtung (90) nicht unterstützt.

6. Verfahren nach Anspruch 5, wobei die Kompetenzkennung der ersten Kommunikationsvorrichtung (90) mindestens eine Komponente einer ersten International Mobile Equipment Identity (IMEI) umfasst.

7. Verfahren nach Anspruch 6, wobei, dass die Kompetenzkennung der ersten Kommunikationsvorrichtung (90) die mindestens eine Komponente der ersten IMEI umfasst, Folgendes umfasst:
die Kompetenzkennung der ersten Kommunikationsvorrichtung (90) umfasst einen Typzuordnungscode, TAC, in der ersten IMEI; oder die Kompetenzkennung der ersten Kommunikationsvorrichtung (90) umfasst einen TAC und eine Seriennummer, SNR, in der ersten IMEI; oder
die Kompetenzkennung der ersten Kommunikationsvorrichtung (90) umfasst einen TAC, eine SNR und eine Softwareversionsnummer, SVN, in der ersten IMEI; oder
die Kompetenzkennung der ersten Kommunikationsvorrichtung (90) umfasst einen TAC, eine SNR und eine Prüfziffer, CD, in der ersten IMEI.

8. Verfahren nach Anspruch 6 oder 7, wobei sich mindestens eine Komponente der Kompetenzkennung der ersten Kommunikationsvorrichtung (90) von mindestens einer Komponente einer zweiten IMEI unterscheidet und die zweite IMEI eine IMEI der ersten Kommunikationsvorrichtung (90) ist.

9. Verfahren nach einem der Ansprüche 6 bis 8, wobei die erste IMEI eine IMEI ist, die von einem Anbieter verwendet wird, zu dem die erste Kommunikationsvorrichtung (90) gehört.

10. Verfahren nach einem der Ansprüche 5 bis 9, wobei sich die Kompetenzkennung der ersten Kommunikationsvorrichtung (90) von einer Kompetenzkennung einer dritten Kommunikationsvorrichtung unterscheidet und die dritte Kommunikationsvorrichtung und die erste Kommunikationsvorrichtung (90) Kommunikationsvorrichtungen unterschiedlicher Anbieter sind.

11. Verfahren nach einem der Ansprüche 5 bis 10, wobei das Verfahren ferner Folgendes umfasst:
Senden, durch die erste Endgerätevorrichtung, einer ersten Radio-Resource-Control-Nachricht, RRC-Nachricht, oder einer ersten Non-Access Stratum-Nachricht, NAS-Nachricht, an die zweite Kommunikationsvorrichtung (100), wobei die erste RRC-Nachricht oder die erste NAS-Nachricht die Kompetenzkennung der ersten Kommunikationsvorrichtung (90) umfasst.

12. Verfahren nach einem der Ansprüche 5 bis 11, wobei die Kompetenzkennung der ersten Kommunikationsvorrichtung in einer NAS-Nachricht in einer RRC-Verbindungsaufbauabschlussnachricht übermittelt wird.

13. Verfahren nach Anspruch 12, wobei das Verfahren ferner Folgendes umfasst:
das Senden, durch die erste Endgerätevorrichtung, von Anzeigeinformationen an die zweite Kommunikationsvorrichtung (100) Folgendes umfasst: Senden einer zweiten RRC-Nachricht oder einer zweiten NAS-Nachricht an die zweite Kommunikationsvorrichtung (100), wobei die zweite RRC-Nachricht oder die zweite NAS-Nachricht die Anzeigeinformationen umfasst.

14. Erste Kommunikationsvorrichtung (200), die einen Prozessor (201) und einen Speicher (203) umfasst, wobei der Speicher dazu konfiguriert ist, eine computerausführbare Anweisung zu speichern, und wenn die erste Kommunikationsvorrichtung (90) läuft, der Prozessor die im Speicher gespeicherte computerausführbare Anweisung ausführt, so dass die erste Kommunikationsvorrichtung (90) das Verfahren zum Melden der Kommunikationskompetenz nach den Ansprüchen 5 bis 13 durchführt.

## Revendications

1. Premier dispositif de communication (90), dans lequel le premier dispositif de communication (90) étant un premier dispositif terminal comprend un module de traitement (901) et un module émetteur-récepteur (902) ;
le module de traitement est configuré pour déterminer un identifiant de capacité du premier dispositif de communication, dans lequel l'identifiant de capacité du premier dispositif de communication est l'un des un ou plusieurs identifiants de capacité correspondant au premier dispositif de communication ; et
le module émetteur-récepteur est configuré pour envoyer l'identifiant de capacité du premier dispositif de communication à un deuxième dispositif de communication (100), dans lequel l'identifiant de capacité du premier dispositif de communication (90) est utilisé pour déterminer une capacité de communication du premier dispositif de communication (90) ;
dans lequel le module de traitement est spécifiquement configuré pour :
lorsque le premier dispositif de communication (90) prend en charge la notification de l'identifiant de capacité du premier dispositif de communication (90), déterminer l'identifiant de capacité du premier dispositif de communication (90) et envoyer l'identifiant de capacité au deuxième dispositif de communication (100), et dans lequel
lorsque le premier dispositif de communication (90) ne prend pas en charge la notification de l'identifiant de capacité du premier dispositif de communication (90), le premier dispositif de communication (90) est configuré pour envoyer des informations d'indication au deuxième dispositif de communication (100), dans lequel les informations d'indication sont utilisées pour indiquer que le premier dispositif de communication (90) ne prend pas en charge la notification de l'identifiant de capacité du premier dispositif de communication (90).

2. Premier dispositif de communication (90) selon la revendication 1, dans lequel l'identifiant de capacité du premier dispositif de communication (90) comprend au moins un composant d'une première identité internationale d'équipement mobile (IMEI), dans lequel l'identifiant de capacité du premier dispositif de communication (90) comprend l'au moins un composant du premier IMEI comprenant :
l'identifiant de capacité du premier dispositif de communication (90) comprend un code d'attribution de type TAC dans le premier IMEI.

3. Premier dispositif de communication (90) selon l'une quelconque des revendications 1 ou 2, dans lequel le module émetteur-récepteur est spécifiquement configuré pour :
envoyer un premier message RRC de commande de ressources radio ou un premier message NAS de strate de non-accès au deuxième dispositif de communication (100), dans lequel le premier message RRC ou le premier message NAS comprend l'identifiant de capacité du premier dispositif de communication (90).

4. Premier dispositif de communication (90) selon l'une quelconque des revendications 1 à 3, dans lequel l'identifiant de capacité du premier dispositif terminal est transporté dans un message NAS dans un message terminé d'établissement de connexion RRC.

5. Procédé de notification de capacité de communication, réalisé par un premier terminal étant un premier dispositif de communication, le procédé comprenant :
la détermination (S303), par le premier dispositif terminal, d'un identifiant de capacité du premier dispositif de communication (90), dans lequel l'identifiant de capacité du premier dispositif de communication (90) est l'un des un ou plusieurs identifiants de capacité correspondant au premier dispositif de communication (90) ; et
l'envoi, par le premier dispositif terminal, de l'identifiant de capacité du premier dispositif de communication (90) à un deuxième dispositif de communication (100), dans lequel l'identifiant de capacité du premier dispositif de communication (90) est utilisé pour déterminer une capacité de communication du premier dispositif de communication (90) ;
dans lequel le procédé comprend en outre :
lorsque le premier dispositif de communication prend en charge la notification de l'identifiant de capacité du premier dispositif de communication, la détermination de l'identifiant de capacité du premier dispositif de communication et l'envoi de l'identifiant de capacité au deuxième dispositif de communication et dans lequel lorsque le premier dispositif de communication (90) ne prend pas en charge la notification de l'identifiant de capacité du premier dispositif de communication (90), l'envoi, par le premier dispositif terminal, des informations d'indication au deuxième dispositif de communication (100), dans lequel les informations d'indication sont utilisées pour indiquer que le premier dispositif de communication (90) ne prend pas en charge la notification de l'identifiant de capacité du premier dispositif de communication (90).

6. Procédé selon la revendication 5, dans lequel l'identifiant de capacité du premier dispositif de communication (90) comprend au moins un composant d'une première identité internationale d'équipement mobile (IMEI).

7. Procédé selon la revendication 6, dans lequel l'identifiant de capacité du premier dispositif de communication (90) comprend l'au moins un composant du premier IMEI comprenant :
l'identifiant de capacité du premier dispositif de communication (90) comprend un code d'attribution de type TAC dans le premier IMEI ; ou
l'identifiant de capacité du premier dispositif de communication (90) comprend un TAC et un numéro de série SNR dans le premier IMEI ; ou
l'identifiant de capacité du premier dispositif de communication (90) comprend un TAC, un SNR et un numéro de version logicielle SVN dans le premier IMEI ; ou
l'identifiant de capacité du premier dispositif de communication (90) comprend un TAC, un SNR et un chiffre de contrôle CD dans le premier IMEI.

8. Procédé selon la revendication 6 ou 7, dans lequel au moins un composant de l'identifiant de capacité du premier dispositif de communication (90) est différent d'au moins un composant d'un second IMEI, et le second IMEI est un IMEI du premier dispositif de communication (90).

9. Procédé selon l'une quelconque des revendications 6 à 8, dans lequel le premier IMEI est un IMEI utilisé par un fournisseur auquel appartient le premier dispositif de communication (90).

10. Procédé selon l'une quelconque des revendications 5 à 9, dans lequel l'identifiant de capacité du premier dispositif de communication (90) est différent d'un identifiant de capacité d'un troisième dispositif de communication, et le troisième dispositif de communication et le premier dispositif de communication (90) sont des dispositifs de communication de différents fournisseurs.

11. Procédé selon l'une quelconque des revendications 5 à 10, dans lequel le procédé comprend en outre :
l'envoi, par le premier dispositif terminal, d'un premier message RRC de commande de ressources radio ou d'un premier message NAS de strate de non-accès au deuxième dispositif de communication (100), dans lequel le premier message RRC ou le premier message NAS comprend l'identifiant de capacité du premier dispositif de communication (90).

12. Procédé selon l'une quelconque des revendications 5 à 11, dans lequel l'identifiant de capacité du premier dispositif de communication est transporté dans un message NAS dans un message terminé d'établissement de connexion RRC.

13. Procédé selon la revendication 12, dans lequel le procédé comprend en outre :
l'envoi, par le premier dispositif terminal, d'informations d'indication au deuxième dispositif de communication (100) comprend : l'envoi d'un second message RRC ou d'un second message NAS au deuxième dispositif de communication (100), dans lequel le second message RRC ou le second message NAS comprend les informations d'indication.

14. Premier dispositif de communication (200), comprenant un processeur (201) et une mémoire (203), dans lequel la mémoire est configurée pour stocker une instruction exécutable par ordinateur, et lorsque le premier dispositif de communication (90) s'exécute, le processeur exécute l'instruction exécutable par ordinateur stockée dans la mémoire, de sorte que le premier dispositif de communication (90) réalise le procédé de notification de capacité de communication selon les revendications 5 à 13.
